**Europäisches Patentamt**

**European Patent Office**

**Office européen des brevets**

(19)

(11) Numéro de publication: **0 166 640**
**B1**

(12) **FASCICULE DE BREVET EUROPÉEN**

(45) Date de publication du fascicule du brevet:
**10.08.88**

(21) Numéro de dépôt: **85401052.7**

(22) Date de dépôt: **29.05.85**

(51) Int. Cl.⁴: **F 16 D 13/64**

(54) Disque de friction d'embrayage de type progressif à construction simplifiée.

(30) Priorité: **30.05.84 FR 8408526**

(43) Date de publication de la demande:
**02.01.86 Bulletin 86/1**

(45) Mention de la délivrance du brevet:
**10.08.88 Bulletin 88/32**

(84) Etats contractants désignés:
**DE FR GB IT**

(56) Documents cité:
**FR-A-866 176**
**FR-A-2 453 318**
**US-A-2 256 698**
**US-A-2 256 709**

(73) Titulaire: **VALEO, 64 Avenue de la Grande Armée,
F-75017 Paris (FR)**

(72) Inventeur: **Graton, Michel, 7, boulevard Mortier,
F-75020 Paris (FR)**
Inventeur: **Carmillet, Roger, 74, rue Championnet,
F-75018 Paris (FR)**

(74) Mandataire: **CABINET BONNET- THIRION, 95
Boulevard Beaumarchais, F-75003 Paris (FR)**

LIBER, STOCKHOLM 1988

## Description

La présente invention se rapporte à un disque de friction d'embrayage, comportant un support de forme générale plane annulaire, ayant à sa périphérie des parties élastiquement déformables, qui sont admises à se déformer lorsque le disque est soumis à une action axiale de serrage, deux garnitures de frottement disposées de part et d'autre du support et fixées localement auxdites parties déformables, en sorte que l'épaisseur du disque au droit des garnitures soit élastiquement compressible entre une position expansée de repos et une position aplatie de serrage.

Les parties élastiquement déformables sont fragmentées en pales pour les besoins de la déformation. Les garnitures, quant à elles, sont, soit constituées par deux blocs annulaires continus, soit, elles aussi, fragmentées en pales.

Quoi qu'il en soit, les disques de friction d'embrayage de ce type, ont la propriété de permettre une progressivité de l'engagement, au moment du serrage du disque de l'embrayage.

On a déjà proposé de donner aux parties déformables une forme ondulée dans la position de repos, tandis que les garnitures sont plates, et, au moment du serrage, les parties déformables ondulées sont admises à s'aplatir en étant pincées entre les garnitures.

On a également proposé, par exemple dans la FR-A-866 176, une disposition inverse en vue d'abaisser le prix de revient, c'est-à-dire on donne aux parties déformables une forme plane dans la position de repos, tandis que les garnitures ont, suivant leurs faces internes, des creux et des bosses complémentaires entre lesquels les parties déformables sont admises à s'onduler, au moment du serrage du disque.

Mais, en général, un tel agencement ne permet pas de donner à la progressivité recherchée, la caractéristique optimale, ou, en tous cas, la plus souhaitable dans chaque cas particulier.

La présente invention a pour objet un disque de friction d'embrayage du type indiqué ci-dessus, qui permet, avec une construction très simple et commode, de donner à la progressivité d'engagement toute caractéristique souhaitée, en vue du meilleur fonctionnement du disque.

Suivant l'invention, un disque de friction d'embrayage présente des parties déformables qui sont sensiblement planes dans la position de repos, tandis que les faces internes des garnitures ont des bosses avantageusement conformées en gradins et alternées avec des creux, les garnitures de frottement étant fixées localement par lesdites bosses auxdites parties déformables, les bosses de la face interne d'une des garnitures étant disposées en regard des creux de la face interne de l'autre garniture et vice versa, de telle façon que la compression du disque entre les positions de repos et de serrage, provoque une déformation élastique des parties déformables par effet d'interpénétration axiale des bosses et des creux, ce disque étant caractérisé en ce que les creux sont plus larges que les bosses, et ménagent entre eux et celles-ci des travées vides, de façon à étager la déformation en au moins deux phases successives, l'une où les parties déformables sont d'abord admises à venir coiffer les bosses d'une manière enveloppante, et l'autre, où les parties déformables, tout en continuant à coiffer les bosses, sont admises à fléchir davantage dans lesdites travées vides.

Grâce à cette disposition, la progressivité du disque est admise à obéir à une loi extrêmement favorable pour le fonctionnement du disque, suivant laquelle la résistance élastique à l'écrasement du disque est d'abord relativement faible, puis devient ensuite plus dure, ce qui permet d'excellentes conditions de travail.

La conformation de chaque bosse en gradins permet aux parties déformables de se déformer dans des conditions favorables.

De préférence, les parties déformables sont fixées par rivets sur les bosses, soit directement suivant un mode de fixation usuel par rivets, soit avec une disposition particulière avantageuse, suivant laquelle chaque rivet est incorporé à une base collée sur le dessus de la bosse et est bouterollé sur la partie déformable du support.

Afin de simplifier la fabrication des garnitures qui comportent les creux et les bosses, suivant une forme d'exécution préférée, chaque garniture se compose d'une couche externe dont l'épaisseur est uniforme et sur laquelle sont fixés des éléments distincts qui constituent les bosses, les creux étant définis par les régions de la face interne de ladite couche qui sont laissées disponibles par lesdits éléments. Ainsi la fabrication est très simple, puisque l'on part de couches d'épaisseur uniforme de garnitures sur lesquelles on vient simplement coller des reliefs pour constituer les bosses.

Suivant un mode de réalisation avantageux, les parties déformables sont fixées sur les bosses par des rivets qui sont solidaires des bosses et qui sont bouterollés sur lesdites parties déformables. En ce cas, les bosses sont prévues avantageusement métalliques, ce qui leur permet de leur faire porter directement les rivets.

Des formes d'exécution de l'invention sont ci-après décrites, à titre d'exemple, en référence aux dessins annexes dans lesquels:

la figure 1 est une vue générale en perspective, avec un arrachement, d'un disque de friction d'embrayage suivant l'invention;

la figure 2 est une vue, en coupe partielle, à plus grande échelle, de ce disque, en coupe suivant la ligne II-II de la figure 1, le disque étant représenté en position desserré;

la figure 3 est une vue analogue à la figure 2, mais dans laquelle le disque est serré partiellement;

la figure 4 est une vue analogue à la figure 2 ou à la figure 3, mais dans laquelle le disque est serré complètement;

la figure 5 concerne une variante des rivets de fixation, avant bouterollage;

la figure 6 est une vue analogue à la figure 5, mais après bouterollage;

la figure 7 concerne une autre variante, dans laquelle les garnitures de friction sont constituées par une couche d'épaisseur uniforme et qui reçoit des bos ses constituées par des éléments distincts collés;

la figure 8 concerne une autre variante encore, dans laquelle les bosses constituées par des éléments distincts collés sur une couche d'épaisseur uniforme, portent solidairement les rivets de fixation.

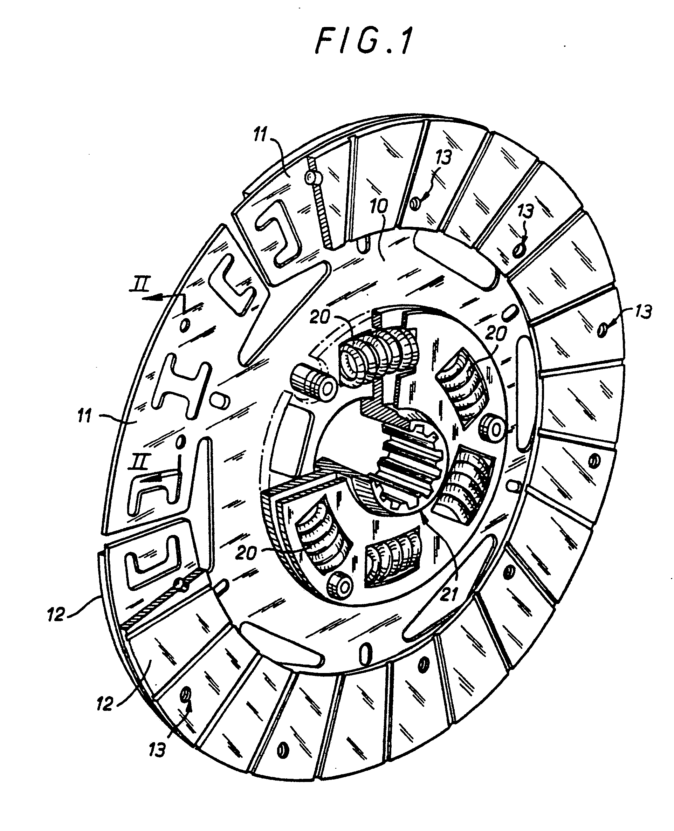

On se référera d'abord aux figures 1 à 4 qui concernent, à titre d'exemple non limitatif, une application de l'invention à un disque de friction, destiné à équiper un embrayage de véhicule automobile. Ce disque de friction est admis à être, soit serré, soit desserré, entre deux plateaux de cet embrayage.

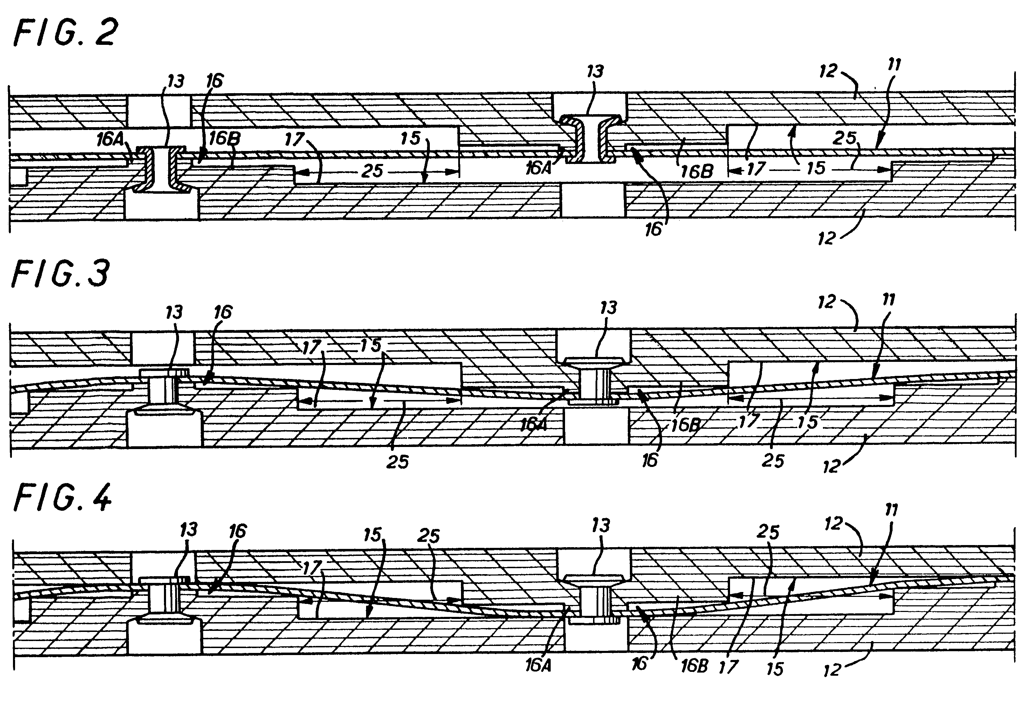

Le disque de friction d'embrayage comporte (figure 1) un support métallique 10 de forme générale annulaire plane perpendiculaire à l'axe du disque. Le support 10 présente à sa périphérie des parties déformables 11 qui peuvent se déformer en opposant une résistance élastique, lorsque le disque est admis à être serré entre les plateaux de l'embrayage. Le disque comporte également des garnitures 12 en matière de frottement, disposées de part et d'autre du support 10 et fixées par des rivets 13 aux parties déformables 11, en sorte que l'épaisseur du disque au droit des garnitures 12 soit élastiquement compressible entre une position expansée de repos (figure 2) et une position aplatie de serrage (figure 4).

Les parties déformables 11 sont sensiblement planes dans la position de repos (figure 2). Les faces internes 15 des garnitures 12 ont des bosses 16 alternées avec des creux 17. Les garnitures de frottement 12 sont fixées localement par les rivets 13, par les bosses 16, aux parties déformables 11. Les bosses 16 de la face interne 15 d'une des garnitures 12, sont disposées en regard des creux 17 de la face interne 15 de l'autre garniture 12, et vice versa, de telle façon que la compression du disque entre les positions de repos et de serrage, provoque une déformation élastique des parties déformables, par effet d'interpénétration axiale des bosses 16 et des creux 17 (figures 2 à 4).

Le support 10 (figure 1) est relié par l'intermédiaire de ressorts amortisseurs de torsion 20 à un moyeu cannelé 21 qui est adapté à être engagé sur un arbre, de telle façon que celui-ci soit entraîné par les plateaux de l'embrayage lorsque le disque est serré entre ces plateaux et à être désaccouplé desdits plateaux, lorsque ceux-ci laissent le disque desserré.

Comme on le voit à la figure 2, les creux 17 sont plus larges que les bosses 16 et ménagent entre eux et celles-ci des travées vides 25, de façon à étager la déformation en au moins deux phases successives dans une de ces phases (figures 2 et 3) les parties déformables 11 sont d'abord admises à venir coiffer les bosses 16 d'une manière enveloppante; dans l'autre phase (figures 3 et 4) les parties déformables 11, tout en continuant à coiffer les bosses 16, sont admises à fléchir davantage dans les travées vides 25.

Plus précisément, chacune des bosses 16 est conformée en gradins et comporte de façon étagée un premier niveau 16A et un deuxième niveau 16B, en retrait par rapport au premier, la face interne étant en retrait par rapport à ce deuxième niveau 16B.

De cette manière, dans la position de repos à la figure 2, les parties déformables 11 sont planes, comme indiqué ci-dessus, et plaquées contre le premier niveau 16A par des rivets 13. Dans cet état, les parties déformables sont très élastiques et peuvent se déformer entre les premiers niveaux 16A des bosses successives 16. Lors de la déformation des parties déformables 11, comme illustré à la figure 3, celles-ci viennent en butée avec l'arrêt à la périphérie du deuxième niveau 16B de chacune des bosses, ce qui a pour effet d'augmenter la raideur effective des parties déformables 11. Cette déformation des parties déformables 11 peut continuer jusqu'à ce que la partie de la face interne 15 à l'opposé de chacune des bosses, vienne en contact avec des zones des parties déformables entourant des rivets 13 tel qu'illustré dans la figure 4. Dans cette position la raideur des parties déformables est à son maximum.

Grâce à cette disposition, on obtient une progressivité ayant une caractéristique optimale, suivant laquelle, au début du serrage du disque, les parties déformables 11 n'opposent qu'une faible résistance élastique, tandis qu'ensuite, cette résistance élastique est admise à croître, ce qui permet d'excellentes conditions de travail.

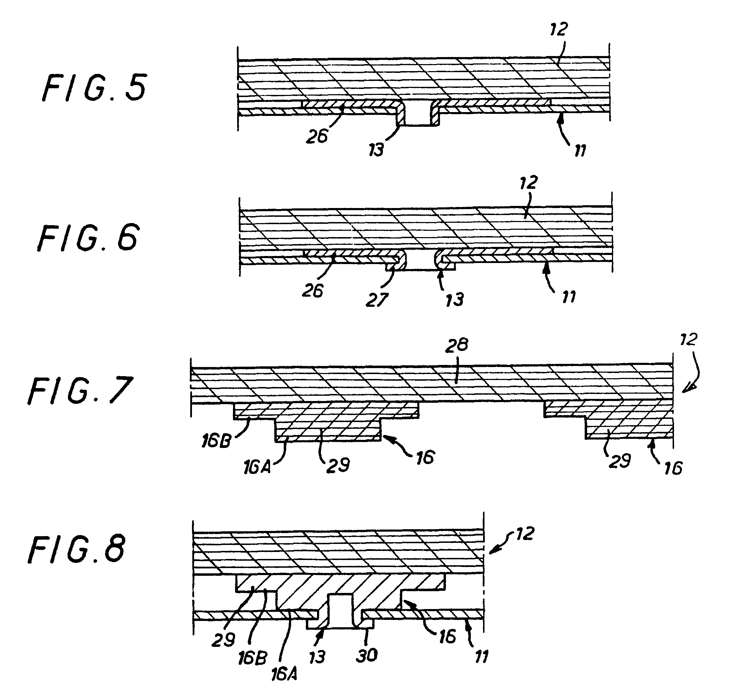

En variante (figures 5 et 6), la disposition est analogue à celle qui vient d'être décrite en référence aux figures 1 à 4, mais chaque rivet 13 est incorporé à une base 26, collée sur le dessus de la bosse 16, et est bouterollé en 27 (figure 6) sur la partie déformable 11 du support 10.

Dans une autre variante (figure 7), chaque garniture 12 se compose d'une couche externe 28 dont l'épaisseur est uniforme et sur laquelle sont fixés des éléments distincts 29, qui constituent ainsi des bosses 16. Les creux 17 sont définis par les régions de la face interne de la couche 28 qui sont laissées disponibles par les éléments 29. On appréciera la construction particulièrement commode et économique de la figure 7.

Dans une autre variante (figure 8), l'agencement est analogue à celui qui vient d'être décrit en référence à la figure 7, et on reconnaît en 29 les éléments distincts qui constituent les bosses 16, mais les rivets 13 sont ici prévus solidaires des éléments distincts 29. Ces rivets 13 sont bouterollés en 30 sur les parties déformables 11, comme on le voit à la figure 8.

## Revendications

1. Disque de friction d'embrayage, comportant un support (10) de forme générale plane annulaire, ayant à sa périphérie des parties élastiquement déformables (11) qui sont admises à se déformer lorsque le disque est soumis à une action axiale de serrage, deux garnitures de frottement (12) disposées de part et d'autre du support et fixées localement auxdites parties déformables, en sorte que l'épaisseur du disque au droit des garnitures soit élastiquement compressible entre une position expansée de repos et une position aplatie de serrage, disque dans lequel les parties déformables (11) sont sensiblement planes dans la position de repos, tandis que les faces internes des garnitures ont des bosses (16) alternées avec des creux (17), les garnitures de frottement étant fixées localement par lesdites bosses auxdites parties déformables, les bosses de la face interne d'une des garnitures étant disposées en regard des creux de la face interne de l'autre garniture, et vice versa, de telle façon que la compression du disque entre les positions de repos et de serrage provoque une déformation élastique des parties déformables par effet d'interpénétration axiale des bosses et des creux, disque <u>caractérisé en ce que</u> chaque bosse (16) est conformée en gradins, en ce que les creux (17) sont plus larges que lesdites bosses et ménagent entre eux et celles-ci, des travées vides (25), de façon à étager la déformation en au moins deux phases successives, l'une où les parties déformables sont d'abord admises à venir coiffer les bosses d'une manière enveloppante, et l'autre où les parties déformables, tout en continuant à coiffer les bosses, sont admises à fléchir davantage dans lesdites travées vides (25).

2. Disque de friction d'embrayage, suivant la revendication 1, caractérisé en ce que les parties déformables (11) sont fixées par rivets (13) sur les bosses (16).

3. Disque de friction d'embrayage suivant la revendication 2, caractérisé en ce que chaque rivet (13) est incorporé à une base collée sur le dessus de la bosse et est bouterollé sur la partie déformable (11) du support (10).

4. Disque de friction d'embrayage suivant la revendication 1 ou 2, caractérisé en ce que chaque garniture (12) se compose d'une couche externe (28) dont l'épaisseur est uniforme et sur laquelle sont fixés les éléments distincts (29) qui constituent les bosses (16), les creux (17) étant définis par les régions de la face interne de ladite couche qui sont laissées disponibles par lesdits éléments (29).

5. Disque de friction d'embrayage suivant la revendication 4, caractérisé en ce que les parties déformables (11) sont fixées sur les bosses (16) par des rivets (13) qui sont solidaires desdites bosses et qui sont bouterollés sur les dites parties déformables.

## Patentansprüche

1. Kupplungsscheibe mit einem Träger (10) von allgemein ebener Ringform, der an seinem Umfang elastisch verformbare Abschnitte (11) aufweist, die sich verformen können, wenn die Scheibe einer axialen Klemmwirkung ausgesetzt wird, zwei Reibbelegen (12), die beidseitig des Trägers angeordnet und lokal an den genannten verformbaren Abschnitten befestigt sind derart, daß die Dicke der Scheibe an der Stelle der Belege zwischen einer ausgedehnten Ruhestellung und einer abgeflachten Klemmstellung elastisch zusammendrückbar ist, wobei bei der Scheibe die verformbaren Abschnitte (11) in der Ruhelage im wesentlichen eben sind, während die Innenseiten der Belege mit Ausnehmungen (17) abwechselnde Vorsprünge (16) aufweisen, die Reibbelege örtlich durch die genannten Vorsprünge an den genannten verformbaren Abschnitten befestigt sind, die Vorsprünge der Innenseite eines der Belege Ausnehmungen der Innenseite des anderen Belags gegenüberliegend angeordnet sind und umgekehrt derart, daß das Zusammendrücken der Scheibe zwischen der Ruhe- und der Klemmlage eine elastische Verformung der verformbaren Abschnitte aufgrund einer axialen gegenseitigen Durchdringung von Vorsprüngen und Vertiefungen hervorruft, <u>dadurch gekennzeichnet</u>, daß jeder Vorsprung (16) abgestuft ausgebildet ist, daß die Ausnehmungen (17) breiter als die genannten Vorsprunge sind und zwischen sich und diesen leere Zwischenräume (25) freilassen derart, daß die Verformung mit wenigstens zwei aufeinanderfolgenden Phasen abgestuft wird, wobei einer oder die verformbaren Abschnitte zu nächst die Vorsprünge in ummantelnder Weise überdecken können, und sich der andere oder die verformbaren Abschnitte, während sie weiterhin die Vorsprünge überdecken, weiter in die genannten leeren Zwischenräume (25) biegen können.

2. Kupplungsscheibe nach Anspruch 1, <u>dadurch gekennzeichnet</u>, daß die verformbaren Abschnitte (11) mit Nieten (13) an den Vorsprüngen (16) befestigt sind.

3. Kupplungsscheibe nach Anspruch 2, <u>dadurch gekennzeichnet</u>, daß jede Niete (13) mit einer oben auf den Vorsprung aufgeklebten Basis eingebaut und auf dem verformbaren Abschnitt (11) des Trägers (10) geschellt ist.

4. Kupplungsscheibe nach Anspruch 1 oder 2, <u>dadurch gekennzeichnet</u>, daß jeder Belag (12) mit einer äußeren Schicht (28) ausgestaltet ist, deren Dicke gleichförmig ist und auf der die einzelnen Elemente (29) befestigt sind, welche die Vorsprünge (16) bilden, wobei die Ausnehmungen (17) durch die Bereiche der Innenseite der genannten Schicht festgelegt sind, die von den genannten Elementen (29) freigelassen sind.

5. Kupplungsscheibe nach Anspruch 4, <u>dadurch</u>

gekennzeichnet, daß die verformbaren Abschnitte (11) an den Vorsprüngen (16) mit Nieten (13) befestigt sind, die einstückig mit den Vorsprüngen sind und auf die genannten verformbaren Abschnitte geschellt sind.

**Claims**

1. Clutch friction disc comprising a support (10) with a generally flat annular shape, having at its periphery elastically deformable parts (11) which can be deformed when the disc is subjected to an axial squeezing action, two friction linings (12) placed on the two sides of the support and locally fixed to the said deformable parts in such a way that the thickness of the disc at right angles to the linings is elastically compressible between an expanded resting position and a flattened squeezed position, wherein the deformable parts (11) are essentially flat in the resting position, whilst the internal faces of the linings have projections (16) alternating with hollows (17), the friction linings being fixed locally through these said projections to the said deformable parts, the projections of the internal face of one lining being disposed opposite the hollows of the internal face of the other lining, and vice versa, in such a way that the compression of the disc between the positions of resting and squeezing causes an elastic deformation of the deformable parts by the axial interpenetration of the projections and hollows, the disc being characterized in that each projection (16) is made in steps, and in that the hollows (17) are wider than the said projections and form empty bays (25) between the hollows and the projections (16), in a manner which produces the deformation in at least two successive phases, one in which the deformable parts are at first displaced to cap the projections in an enveloping fashion, and the other in which the deformable parts, whilst continuing to cap the projections, are allowed to bend further into the said empty bays (25).

2. Clutch friction disc according to Claim 1, characterized in that the deformable parts (11) are fixed to the projections (16) by rivets (13).

3. Clutch friction disc according to Claim 1, characterized in that each rivet (13) is incorporated in a base bonded on the top of the projection and is punched with a riveting tool on the deformable part (11) of the support (10).

4. Clutch friction disc according to Claim 1 or Claim 2, characterized in that each friction lining (12) consist of an outer layer (28) the thickness of which is constant and on which are fixed the distinct elements (29) which constitute the projections (16), the hollows (17) being defined by the regions of the internal face of the said layer which are left uncovered by the said elements (29).

5. Clutch friction disc according to Claim 4, characterized in that the deformable parts (11) are fixed to the projections (16) by rivets (13) which are integral with the said projections and which are punched with a riveting tool on the said deformable parts.

# FIG.1

1

FIG. 2

FIG. 3

FIG. 4

0 166 640

FIG. 5

FIG. 6

FIG. 7

FIG. 8